# EUROPEAN PATENT SPECIFICATION

(11) **EP 2 595 517 B1**
(45) Date of publication and mention of the grant of the patent: **24.01.2018**
(21) Application number: 11723487.2
(22) Date of filing: 07.06.2011
(51) Int. Cl.: A47J 31/44, A47J 31/60

(54) **MILK CONTAINER CONNECTABLE WITH THE STEAM AND/OR WATER DELIVERY TUBE OF A COFFEE MACHINE, COFFEE MACHINE HAVING SAID CONTAINER, AND METHOD OF WASHING SAID CONTAINER**
MILCHBEHÄLTER MIT ANSCHLUSSMÖGLICHKEIT AN EIN DAMPF- UND/ODER WASSERABGABEROHR EINER KAFFEEMASCHINE, KAFFEEMASCHINE MIT DERARTIGEM BEHÄLTER UND VERFAHREN ZUR REINIGUNG DES BEHÄLTERS
RÉCIPIENT À LAIT POUVANT ÊTRE RELIÉ AU TUBE DE DISTRIBUTION DE VAPEUR ET/OU D'EAU D'UNE MACHINE À CAFÉ, MACHINE À CAFÉ COMPORTANT LEDIT RÉCIPIENT, ET PROCÉDÉ DE LAVAGE DUDIT RÉCIPIENT

(30) Priority: 20.07.2010 IT MI20101334
(43) Date of publication of application: 29.05.2013
(73) Proprietor: De'Longhi Appliances S.r.l., 31100 Treviso (IT)
(72) Inventor: DE' LONGHI, Giuseppe, I-31100 Treviso (IT)
(74) Representative: Rapisardi, Mariacristina
(86) International application number: PCT/EP2011/059391
(87) International publication number: WO 2012/010370

(56) References cited:
- EP-A1- 1 656 863
- EP-A2- 1 374 748
- WO-A2-2005/102126
- WO-A2-2010/044116

## Description

The present invention generally relates to a milk container connectable with the steam and/or water delivery tube of a coffee machine, a coffee machine having said container and a method of washing internal parts of said container. The invention is set out in the appended claims. One version of a coffee machine today present on the market has a milk container connectable with the steam and/or water delivery tube of the coffee machine for the delivery into a cup of frothed milk to which brewed coffee is added for the preparation of a cappuccino.

In general such a container has a cover supporting a collector body having in turn a connecting route to a steam and/or water delivery tube for the coffee machine, a first access opening for a flow of milk connected to a pipe for the intake of the milk present in the container, a second access opening for a flow of air connected to piping for the intake of air, and a connecting route to a delivery nozzle.

The collector body and/or steam and/or water delivery tube are configured in such a way as to create a depression along the flow of steam and/or water in order to suck into it the flow of air and the flow of milk.

The flow of milk is heated under the effect of the flow of steam and frothed under the effect of the flow of air before being delivered by the nozzle.

Said container can include a system for manually or automatically regulating the flow of air, exclusively intended to regulate the froth of the milk beverage according to the consumer's preferences.

Given that during use the internal parts of the container, and in particular the collector body and the piping for the flow of air, tend to become contaminated with milk residues, it is necessary to provide a washing system that prevents the formation of encrustations which would cause a decline in the performance of the machine, as well as a worsening in the hygienic conditions thereof.

Many of the washing systems known today are characterised by excessive structural and functional complexity, and are above all not very convenient for the consumer, who is required to carry out a lengthy operation to complete the washing, for example by holding down a pushbutton for the whole time necessary for the washing itself.

Moreover, such washing systems often do not offer the possibility of easy access to and/or inspection of the washed parts to check the state of cleanliness of the parts liable to become dirty. WO 2005/102 126 A2 disclose a milk container connectable with the steam and/or water delivery tube of a coffee machine according to the preamble of claim 1.

WO-A-2010/044116 A2 describes a coffe machine provided with accessories for froting milk. The technical task the present invention has set itself is therefore to realize a milk container connectable with the steam and/or water delivery tube of a coffee machine, a coffee machine comprising said container, and a method for washing said container which allows the aforementioned technical drawbacks of the prior art to be overcome.

Within the scope of this technical task, one object of the invention is to realize a milk container connectable with the steam and/or water delivery tube of a coffee machine which enables washing of the internal parts thereof with a structurally and functionally simple, effective system.

Another object of the invention is to realize a milk container connectable with the steam and/or water delivery tube of a coffee machine that offers facilitated means of inspecting and accessing the parts liable to become dirty for a rapid assessment of their condition.

Another object of the invention is to realize a milk container connectable with the steam and/or water delivery tube of a coffee machine that is configured in such a way as to minimise exposure of its internal parts to the risk of contamination with milk residues.

The technical task, as well as these and other objects, according to the present invention are achieved by realizing a milk container connectable with the steam and/or water delivery tube of a coffee machine comprising a collector body having a connecting route to said steam and/or water delivery tube, a first opening for the ingress of milk connected to a pipe for the intake of the milk present in said container, a second opening for the ingress of air, connected to piping for the intake of air, and a connecting route to a delivery nozzle, a manual control member being also provided for means of regulating the intake of air, capable of bringing about a substantially inverse correlation between the flow of air and the flow of milk sucked into said flow of steam and/or water by virtue of a depression along said flow of steam and/or water, said control member having at least one first position for commanding production of hot and/or frothed milk wherein said regulating means establish a positive value both for said flow of air and for said flow of milk sucked into said flow of steam and/or water, characterized in that said control member has at least one second position for commanding the execution of a cycle for washing said collector body and/or said nozzle with said flow of steam and/or water, in which said regulating means establish a maximum value for said flow of air which corresponds to a null value for said flow of milk.

Preferably said regulating means comprise a plunger for regulating the section that said flow of air passes through in said piping.

Preferably said plunger is integral with said manual control member.

Preferably the container comprises means of assent to the execution of said washing cycle, activatable by said manual control member.

Preferably said means of assent comprise a cam integral with said control member, and a lever activatable by said cam and having an element detectable by a sensor when said control member reaches said second position for generating a signal of assent to the execution of said washing cycle.

In a preferred embodiment said detectable element comprises at least one permanent magnet.

Preferably said control member comprises a rotatable knob.

Preferably said collector body, said piping means, said control member, said regulating means, said intake pipe for the milk and said delivery nozzle are supported by a removable cover for said container.

Preferably said cover has a dismountable structure comprising a first cover portion supporting said control member and a second cover part supporting said collector body.

In a preferred embodiment said container has snap connection means between said first cover portion and said second cover portion.

Preferably said piping comprises a tubular valve body in which is positioned said plunger and a flexible tube which has at opposite ends a first and a second connector, said valve body being supported by said first cover portion, said flexible tube having said first connector dismountably connected to said valve body and said second connector dismountably connected to said opening for the ingress of air.

Preferably said tubular valve body supports inside it in fixed manner an inclined seal against which said plunger is removably engaged by insertion under pressure. Preferably said valve body is in an offset and remote position from said opening for the ingress of air. The present invention is set out in the appended claims. The embodiments, aspects or examples according to the present description that do not fall within the scope of said claims are provided for illustrative purposes only and do not form part of the present invention. Further characteristics and advantages of the invention will be more apparent from the description of a preferred, but not exclusive embodiment of the milk container for a coffee machine according to the invention, illustrated by way of non-restrictive example in the appended drawings in which:
figure 1 shows a plan view from above of the milk container connected with the coffee machine;

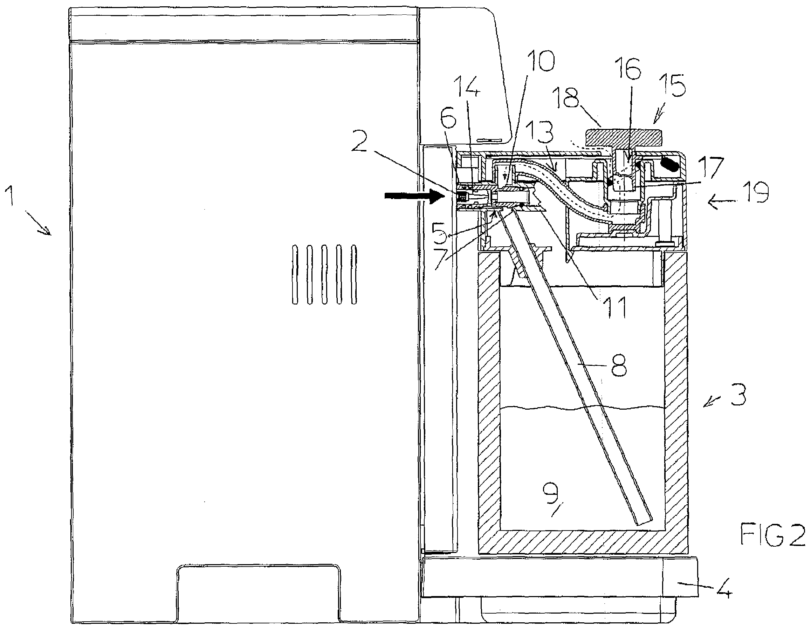

figure 2 shows a side elevation view of the milk container connected with the coffee machine, with the container vertically sectioned according to the line 2-2 of figure 1, and the path of the air indicated by a broken arrow;

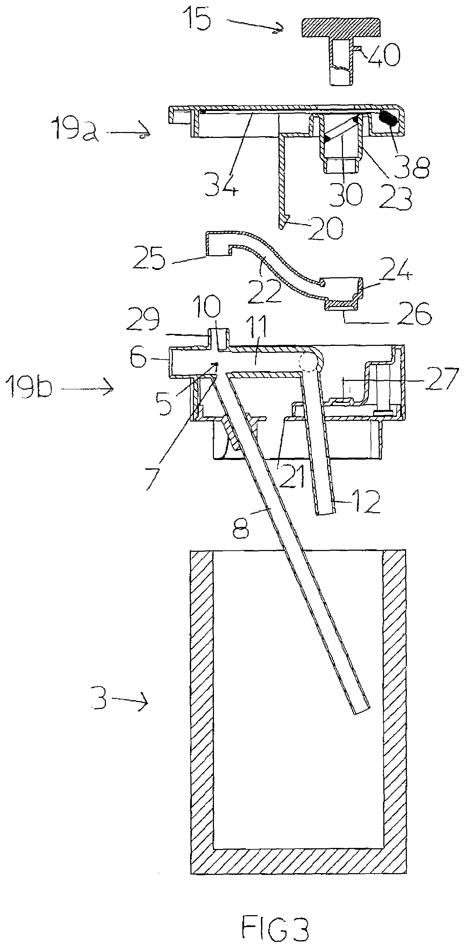

figure 3 shows a side elevation of the container of figure 1 vertically sectioned according to the line 2-2 of figure 1 and dismounted into its constituent parts;
figures 4a and respectively 4b schematically show the regulating means in the second and respectively first position of the manual control member, with the path of the air indicated by a continuous arrow;
figures 4c and 4d are sections along the lines 4b-4b and respectively 4c-4c of the regulating means of figures 4a and respectively 4b;
figure 5 shows a perspective view of the cover with the manual control member extracted from the valve body.

With reference to the aforementioned figures, there is shown a coffee machine 1 having a steam and/or water delivery tube 2 with which a milk container 3 is removably connected.

The delivery tube 2 projects horizontally from the front wall of the coffee machine 1, which in turn has the milk container 3 resting on the cup stand 4, but it is evident that the position and orientation of the delivery tube 2 and the position of the milk container 3 can be different from those illustrated, for example the milk container 3 can also be positioned at the side of the cup stand 4 and the delivery tube 2 can also project from a side wall of the coffee machine 1 and also have a vertical orientation.

The milk container 3 comprises a collector body 5 having a connecting route 6 to the delivery tube 2, a first opening 7 for the ingress of milk, connected to a pipe 8 for the intake of the milk 9 present in the container 3, a second opening 10 for the ingress of air connected to piping 13 for the intake of air, and a connecting route 11 to a delivery nozzle 12.

The collector body 5 and/or delivery tube 2, in particular the latter in the case illustrated, is configured in such a way as to create a depression along the flow of steam and/or water in order to suck the flow of air coming from the pipe 8 and the flow of milk coming from the piping 13 into the flow of steam and/or water.

In particular the delivery tube 2 is shaped with a progressive narrowing of its internal passage section 14, which creates an acceleration and consequently a depressurization of the flow of steam and/or water.

The container 3 has a manual control member 15 for means 16 of regulating the intake of air which bring about a substantially inverse correlation between the flow of air and the flow of milk sucked into the flow of steam and/or water.

The collector body 5, the piping means 13, the control member 15, the regulating means 16, the intake pipe 8 for the milk and the delivery nozzle 12 are supported by a removable cover 19 for the container 3.

The control member 15 has at least one first position for commanding production of hot and/or frothed milk wherein the regulating means 16 establish a positive value both for the flow of air and for the flow of milk sucked into the flow of steam and/or water, and at least one second position for commanding the execution of a cycle for washing the collector body 5 and the nozzle 12 with a flow of steam and/or water coming from the delivery tube 2, in which the regulating means 16 establish a maximum value for the flow of air which corresponds to a null value for the flow of milk.

The regulating means 16 comprise a plunger 17 for regulating the section that the flow of air passes through in the piping 13.

The plunger 17 is integral with the manual control member 15, which in particular comprises a rotatable knob 18.

The cover 19 has a dismountable structure comprising a first cover portion 19a supporting the control member 15 and a second cover portion 19b supporting the collector body 5, together with the pipe 8 for the milk and the nozzle 12.

The first cover portion 19a and the second cover portion 19b are snap connected by means of an elastic tooth 20 hooked to a snap seat 21.

The seat 21 is positioned in such a way as to make the elastic tooth 20 directly accessible to the user in order to allow rapid manual disassembly between the first cover portion 19a and the second cover portion 19b.

In particular, the seat 21 is provided on the face of the cover 19 turned toward the inside of the container 3 in such a way as not to be accessible to the user for safety reasons only when the cover 19 is applied to close the container 3.

Advantageously, the piping 13 comprises a flexible tube 22 and a tubular valve body 23 supported by the first cover portion 19a and accommodating the plunger 17.

The lateral wall of the valve body 23 has a groove 39 which extends in a plane orthogonal to the axis of the valve body 23 and is suitable for receiving a bayonet coupling tooth 40 of the plunger 17.

The lateral wall of the valve body 23 also has a footprint 41 of the tooth 40 which extends in the direction of the axis of the valve body 23 from the upper surface of the cover 19 to the groove 39 to allow the introduction and extraction of the tooth 40 from the groove 39.

The plunger 17, which has a cylindrical hollow body, is coaxially inserted under pressure into the tubular valve body 23.

To insert the plunger 17 it is necessary to angularly align the tooth 40 with the footprint 41, then proceed to insert the tooth 40 in an axial direction along the footprint 41 and subsequently rotate the plunger 17 to introduce the tooth 40 into the groove 39. Outside this angular position indicated with 15e the control member 15 is freely rotatable about its axis but cannot be extracted from the valve body 23 due to the engagement of the tooth 40 in the groove 39.

The flexible tube 22 has at one end a first connector 24 dismountably connected to the valve body 23 and at the other end a second connector 25 dismountably connected to the opening 10 for the ingress of air into the collector body 5.

The flexible tube 22 is preferably of transparent material to facilitate viewing of the state of cleanliness inside it.

The first connector 24 comprises a bushing fitted over the valve body 23 and held in position, when the cover 19 is assembled, by virtue of the coupling of an outer formation 26 thereof with a formation 27 of mating shape present on a wall 28 of the second cover portion 19b.

The second connector 25 comprises a bushing fitted under pressure over a tubular union 29 which extends from the second cover portion 19b and circumscribes the opening 10.

The piping 13 is configured in such a way as to dispose the valve body 23 in an offset and remote position from the opening 10 for the ingress of air into the collector body 5. This configuration is particularly convenient because it prevents the possibility that any milk residues coming out of collector body 5 through the opening 10 can reach and thus dirty the valve body 23.

The tubular valve body 23 has along its inside perimeter a fixed seal 30 which extends along a closed line at a variable height relative to the axis of the tubular valve body 23.

The plunger 17 perimetrically engages against the seal 30 with its lateral wall.

The lateral wall of the plunger 17 has a groove 31 that has a depth of penetration into the thickness of the lateral wall of the plunger 17 which increases progressively in the axial direction of the plunger 17.

The groove 31, in its point of greatest depth of penetration into the thickness of the lateral wall of the plunger 17, is connected to a hole 70 from which the air has free access to the intake piping 13.

The rotation of the plunger 17 about its own axis brings about a shift, in an axial direction, of the zone of intersection between the seal 30 and the groove 31 which, due to the variability in the depth of penetration of the groove 31, in turn brings about a modification in the section the flow of air passes through in the intake piping 13.

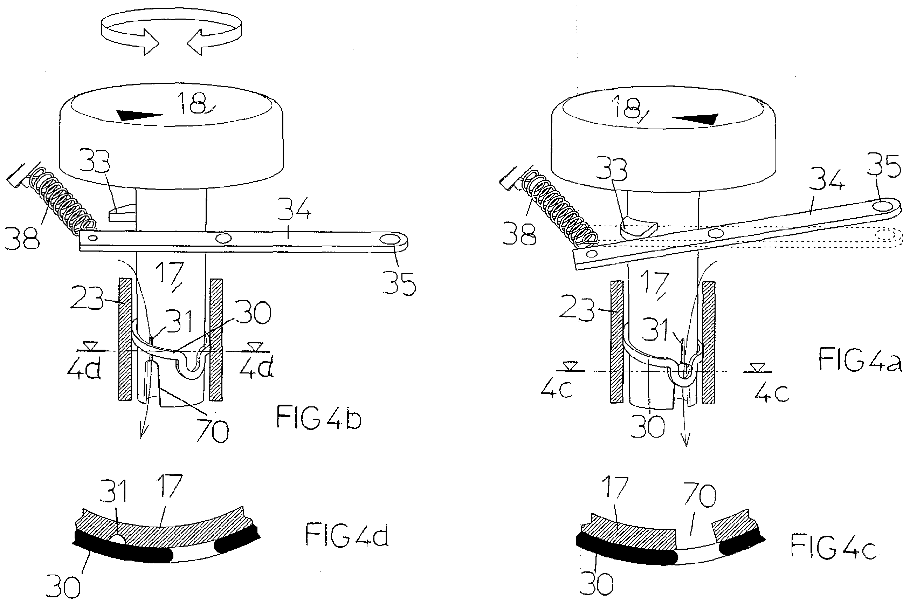

In the case illustrated the control member 15 has a position 15a for commanding production of non-frothed milk in which the regulating means 16 establish a null value for the flow of air (the seal 30 is offset from the groove 31), which corresponds to a maximum value for the flow of milk, a position 15b for commanding production of normally frothed milk, in which the regulating means 16 establish a positive value for the flow of air corresponding to a positive value for the flow of milk (fig. 4b), a position 15c for commanding production of abundantly frothed milk, in which the regulating means 16 establish a greater positive value for the flow of air than the one brought about in the preceding position, which corresponds to a lower positive value of the flow of milk than the one brought about in the preceding position (the zone of intersection between the seal 30 and the groove 31 shifts downward in an axial direction, freeing a larger section for the passage of air in the intake piping 13), a position 15d for commanding the execution of the washing cycle (fig. 4a, in which the zone of intersection between the seal 30 and the groove 31 shifts even further downward in an axial direction, freeing the maximum section for the passage of air in the intake piping 13), and the position 15e required as noted above for the mounting and dismounting thereof from the valve body 23.

The milk container 3 advantageously comprises means of assent to the execution of the washing cycle, activatable by the manual control member 15.

The means of assent comprise a cam 33 integral with the control member 15, and a lever 34 activatable by the cam 33 and having an element 35 detectable by a sensor 36 when the control member 15 reaches the position 15d for generating a signal of assent to the execution of the washing cycle.

The cam 33 is integral or even integrated and coaxial in rotation with the knob 18. The lever 34 is fulcrumed in 37 to the cover 19 and has at the end of one of its lever arms a return spring 38 fixed to the cover 19, and at the end of its other lever arm the element 35, comprising in particular a permanent magnet.

The sensor 36 is of a magnetic type and is positioned on the front wall of the coffee machine.

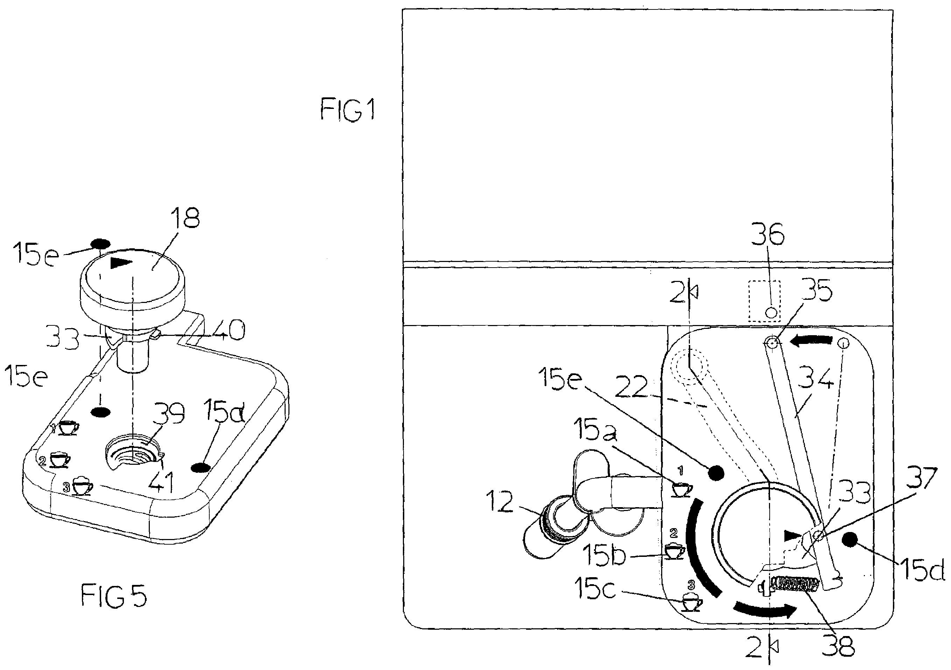

The spring 38 is designed to return the lever 34 into a neutral position (indicated by broken lines in figure 1) when the manual control member 15 is not in position 15d.

The functioning of the coffee machine is briefly as follows.

When the consumer wants a cappuccino, he connects the milk container 3, possibly kept in the refrigerator, to the delivery tube 2 of the coffee machine, turns the knob 18 into position 15a or 15b or 15c according to the desired degree of frothing, and presses a pushbutton located on the front control panel of the coffee machine to start delivery.

When he feels it necessary to wash the parts inside the cover 3, the consumer turns the knob 18 into position 15d. During this rotation the cam 33 turns the lever 34, initially in the neutral position, until bringing the permanent magnet 35 within the range of action of the magnetic sensor 36, which, when it detects the permanent magnet 35, sends to the control unit of the coffee machine a signal of assent to washing which produces a washing flow of steam and/or water through the delivery tube 2.

In this condition the status of the regulating means is as indicated in figure 4a.

The flow of air sucked into the washing flow of steam and/or water is of such entity as to suffice on its own to compensate for the depression that is created along the washing flow of steam and/or water, and therefore no suction of the milk takes place.

The washing flow of steam and/or water passes through and cleans the collector body 5 and the nozzle 12 from which it is expelled and conveyed, for example, into the tray normally present below the cup stand 4.

The return spring 38 acts in such a way that, when the consumer brings the knob 18 back into one of the delivery positions 15a, 15b, 15c or in position 15e of extraction of the knob 18, the lever 34 returns into its neutral position in which the permanent magnet 35 is outside the range of action of the magnetic sensor 36.

Practically speaking, it has been ascertained how the container according to the invention is particularly advantageous by virtue of the fact of being easily cleanable, inspectable and dismountable in all of its parts.

The risk of the functional parts of the cover of the container being contaminated by milk is intrinsically low due to the fact that the valve body in which the plunger is housed is well away from the hole of the collector body by which air enters.

The execution of the washing cycle, moreover, is particularly convenient for the consumer, who only has to turn a knob without any need to perform a lengthy action on a control part of the machine.

The milk container for a coffee machine thus conceived is susceptible of numerous modifications and variants, all falling within the scope of the present invention as set out in the claims that follow. In practice, the materials used, as well as the dimensions, can be any whatsoever according to need and the state of the art.

## Claims

1. A milk container (3) configured to be connected with the steam and/or water delivery tube (2) of a coffee machine (1), said milk container (3) comprising a collector body (5) having a connecting route (6) to said steam and/or water delivery tube (2), a first opening (7) for the ingress of milk, connected to a pipe (8) for the intake of the milk present in said container (3), a second opening (10) for the ingress of air, connected to piping (13) for the intake of air, and a connecting route (11) to a delivery nozzle (12), a manual control member (15) and a regulating means (16) to regulate the intake of air, and configured to bring about a substantially inverse correlation between the flow of air and the flow of milk sucked into said flow of steam and/or water by virtue of a depression along said flow of steam and/or water, said control member (15) having at least one first position (15a, 15b, 15c) for commanding production of hot and/or frothed milk in which said regulating means (16) establish a positive value both for said flow of air and for said flow of milk sucked into said flow of steam and/or water, and wherein said regulating means (16) comprises a plunger (17) configured to regulate the section that said flow of air passes through in the piping (13); and **characterized in that** said control member (15) has at least one second position (15d) for commanding the execution of a cycle for washing said collector body (5) and/or said nozzle (12) with said flow of steam and/or water, in which said regulating means (16) and plunger (17) establish a maximum value for said flow of air, which corresponds to a null value for said flow of milk.

2. The milk container (3) according to the preceding claim, **characterized in that** said plunger (17) is integral with said manual control member (15).

3. The milk container (3) according to any one of the preceding claims, **characterized by** comprising means of assent to the execution of said washing cycle, activatable by said manual control member (15).

4. The milk container (3) according to the preceding claim, **characterized in that** said means of assent comprise a cam (33) integral with said control member (15), and a lever (34) activatable by said cam (33) and having an element (35) detectable by a sensor (36) when said control member (15) reaches said second position (15d) for generating a signal of assent to the execution of said washing cycle.

5. The milk container (3) according to the preceding claim, **characterized in that** said detectable element (35) comprises at least one permanent magnet.

6. The milk container (3) according to any one of the preceding claims, **characterized in that** said control member (15) comprises a rotatable knob (18).

7. The milk container (3) according to any one of the preceding claims, **characterized in that** said collector body (5), said piping means (13), said control member (15), said regulating means (16), said intake pipe (8) for the milk and said delivery nozzle (12) are supported by a removable cover (19) for said container (3).

8. The milk container (3) according to claim 7, **characterized in that** said cover (19) has a dismountable structure comprising a first cover portion (19a) supporting said control member (15) and a second cover part (19b) supporting said collector body (5).

9. The milk container (3) according to the preceding claim, **characterized by** having snap connection means between said first cover portion (19a) and said second cover portion (19b).

10. The milk container (3) according to any one of the preceding claims, **characterized in that** said piping (13) comprises a tubular valve body (23) in which is positioned said plunger (17) and a flexible tube (22) which has at opposite ends a first and a second connector (24, 25), said valve body (23) being supported by said first cover portion (19a), said flexible tube (22) having said first connector (24) dismountably connected to said valve body (23) and said second connector (25) dismountably connected to said opening (10) for the ingress of air.

11. The milk container (3) according to the preceding claim, **characterized in that** said tubular valve body (23) supports inside it in fixed manner an inclined seal (30) against which said plunger (17) is removably engaged by insertion under pressure.

12. The milk container (3) according to claim 10 **characterized in that** said valve body (23) is in an offset and remote position from said opening (10) for the ingress of air.

13. A coffee machine (1) **characterized by** comprising a milk container (3) according to any one of the preceding claims.

14. A method of washing a milk container (3) configured to be connected with the steam and/or water delivery tube (2) of a coffee machine (1), said container (3) comprising a collector body (5) having a connecting route (6) to said steam and/or water delivery tube (2), a first opening (7) for the ingress of milk, connected to a pipe (8) for the intake of the milk present in said container (3), a second opening (10) for the ingress of air connected to piping (13) for the intake of air, and a connecting route (11) to a delivery nozzle (12), a manual control member (15) and a regulating means (16) to regulate the intake of air, and configured to bring about a substantially inverse correlation between the flow of air and the flow of milk sucked into said flow of steam and/or water by virtue of a depression along said flow of steam and/or water, said control member (15) having at least one first position for commanding production of hot and/or frothed milk wherein said regulating means (16) establish a positive value both for said flow of air and for said flow of milk sucked into said flow of steam and/or water, and wherein said regulating means (16) comprises a plunger (17) configured to regulate the section that said flow of air passes through in the piping (13); and **characterized by** washing said collector body and/or said nozzle with said flow of steam and/or water, by setting said control member (15) in a second position where said regulating means (16) and said plunger (17) establish a maximum value for said flow of air, which corresponds to a null value for said flow of milk.

## Patentansprüche

1. Milchbehälter (3), ausgelegt, um an ein Dampf- und/oder Wasserabgaberohr (2) einer Kaffeemaschine (1) angeschlossen zu werden, wobei der Milchbehälter (3) einen Sammelkörper (5) umfasst, aufweisend einen Verbindungsweg (6) an das Dampf- und/oder Wasserabgaberohr (2), eine erste Öffnung (7) für den Milcheintritt, verbunden mit einer Leitung (8) für den Einlass der im Behälter (3) enthaltenen Milch, eine zweite Öffnung (10) für den Eintritt von Luft, verbunden mit der Rohrleitung (13) für den Einlass von Luft, und einen Verbindungsweg (11) an eine Zuführdüse (12), ein manuelles Bedienelement (15) und Regulierungsmittel (16), um die Einlassluft zu regulieren, und ausgelegt, um eine im Wesentliche umgekehrte Korrelation zwischen dem Luftstrom und dem in den Dampf- und/oder Wasserstrom angesaugten Milchstrom durch einen Unterdruck entlang des Dampf- und/oder Wasserstroms hervorzurufen, wobei das Bedienelement (15) mindestens eine erste Position (15a, 15b, 15c) aufweist, um die Erzeugung von heißer und/oder aufgeschäumter Milch zu steuern, wobei die Regulierungsmittel (16) einen positiven Wert sowohl für den Luftstrom als auch für den in den Dampf- und/oder Wasserstrom angesaugten Milchstrom herstellen, wobei die Regulierungsmittel (16) einen Kolben (17) umfassen, der ausgelegt ist, um den Querschnitt zu regeln, mit dem der Luftstrom durch die Rohrleitung (13) strömt, **dadurch gekennzeichnet, dass** das Bedienelement (15) mindestens eine zweite Position (15d) aufweist, um die Ausführung eines Zyklus zur Reinigung des Sammelkörpers (5) und/oder der Düse (12) mit dem Dampf- und/oder Wasserstrom zu steuern, wobei die Regulierungsmittel (16) und der Kolben (17) einen Höchstwert für diesen Luftstrom herstellen, der einem Nullwert für den Milchstrom entspricht.

2. Milchbehälter (3) nach dem vorhergehenden Anspruch, **dadurch gekennzeichnet, dass** der Kolben (17) fest mit dem manuellen Bedienelement (15) verbunden ist.

3. Milchbehälter (3) nach einem der vorhergehenden Ansprüche, **dadurch gekennzeichnet, dass** er Zustimmmittel für die Ausführung des Reinigungszyklus umfasst, aktivierbar mittels des manuellen Bedienelements (15).

4. Milchbehälter (3) nach dem vorhergehenden Anspruch, **dadurch gekennzeichnet, dass** die Zustimmmittel einen Nocken (33) umfassen, der fest mit dem Bedienelement (15) verbunden ist, und einen Hebel (34), der mittels des Nockens (33) betätigt werden kann, aufweisend ein Element (35), das durch einen Sensor (36) erfasst werden kann, wenn das Bedienelement (15) die zweite Position (15d) erreicht, um ein Zustimmsignal für die Ausführung des Reinigungszyklus zu generieren.

5. Milchbehälter (3) nach dem vorhergehenden Anspruch, **dadurch gekennzeichnet, dass** das erfassbare Element (35) mindestens einen Permanentmagneten umfasst.

6. Milchbehälter (3) nach einem der vorhergehenden Ansprüche, **dadurch gekennzeichnet, dass** das Bedienelement (15) einen drehbaren Knopf (18) umfasst.

7. Milchbehälter (3) nach einem der vorhergehenden Ansprüche, **dadurch gekennzeichnet, dass** der Sammelkörper (5), die Rohrleitungsmittel (13), das Bedienelement (15), die Regulierungsmittel (16), die Einlassleitung (8) für die Milch und die Zuführdüse (12) von einer entfernbaren Abdeckung (19) für den Behälter (3) gestützt werden.

8. Milchbehälter (3) nach Anspruch 7, **dadurch gekennzeichnet, dass** die Abdeckung (19) eine demontierbare Struktur aufweist, umfassend einen ersten Abdeckungsabschnitt (19a), stützend das Bedienelement (15), und einen zweiten Abdeckungsteil (19b), stützend den Sammelkörper (5).

9. Milchbehälter (3) nach dem vorhergehenden Anspruch, **dadurch gekennzeichnet, dass** er Schnappverbindungsmittel zwischen dem ersten Abdeckungsabschnitt (19a) und dem zweiten Abdeckungsabschnitt (19b) aufweist.

10. Milchbehälter (3) nach einem der vorhergehenden Ansprüche, **dadurch gekennzeichnet, dass** die Rohrleitung (13) einen rohrförmigen Ventilkörper (23) umfasst, in dem der Kolben (17) positioniert ist, und einen flexiblen Schlauch (22), der an entgegengesetzten Seiten einen ersten und einen zweiten Verbinder (24, 25) aufweist, wobei der Ventilkörper (23) vom ersten Abdeckungsabschnitt (19a) gestützt wird, wobei der erste Verbinder (24) des flexiblen Schlauchs (22) demontierbar am Ventilkörper (23) angeschlossen ist und der zweite Verbinder (25) demontierbar an der Öffnung (10) für den Lufteintritt angeschlossen ist.

11. Milchbehälter (3) nach dem vorhergehenden Anspruch, **dadurch gekennzeichnet, dass** der rohrförmige Ventilkörper (23) innenseitig auf fixe Weise eine geneigte Dichtung (30) stützt, gegen die der Kolben (17) entfernbar durch Einfügung unter Druck im Eingriff ist.

12. Milchbehälter (3) nach Anspruch 10, **dadurch gekennzeichnet, dass** der Ventilkörper (23) von der Öffnung (10) für den Lufteintritt versetzt und entfernt positioniert ist.

13. Kaffeemaschine (1), **dadurch gekennzeichnet, dass** sie einen Milchbehälter (3) nach einem der vorhergehenden Ansprüche umfasst.

14. Verfahren zur Reinigung eines Milchbehälters (3), ausgelegt, um an ein Dampf- und/oder Wasserabgaberohr (2) einer Kaffeemaschine (1) angeschlossen zu werden, wobei der Behälter (3) einen Sammelkörper (5) umfasst, aufweisend einen Verbindungsweg (6) an das Dampf- und/oder Wasserabgaberohr (2), eine erste Öffnung (7) für den Milcheintritt, verbunden mit einer Leitung (8) für den Einlass der im Behälter (3) enthaltenen Milch, eine zweite Öffnung (10) für den Eintritt von Luft, verbunden mit der Rohrleitung (13) für den Einlass von Luft, und einen Verbindungsweg (11) an eine Zuführdüse (12), ein manuelles Bedienelement (15) und Regulierungsmittel (16), um die Einlassluft zu regulieren, und ausgelegt, um eine im Wesentliche umgekehrte Korrelation zwischen dem Luftstrom und dem in den Dampf- und/oder Wasserstrom angesaugten Milchstrom durch einen Unterdruck entlang des Dampf- und/oder Wasserstroms hervorzurufen, wobei das Bedienelement (15) mindestens eine erste Position aufweist, um die Erzeugung von heißer und/oder aufgeschäumter Milch zu steuern, wobei die Regulierungsmittel (16) einen positiven Wert sowohl für den Luftstrom als auch für den in den Dampf- und/oder Wasserstrom angesaugten Milchstrom herstellen, wobei die Regulierungsmittel (16) einen Kolben (17) umfassen, der ausgelegt ist, um den Querschnitt zu regeln, mit dem der Luftstrom durch die Rohrleitung (13) strömt, **dadurch gekennzeichnet, dass** der Sammelkörper und/oder die Düse mit dem Dampf- und/oder Wasserstrom gereinigt werden, indem das Bedienelement (15) in eine zweite Position gestellt wird, in der die Regulierungsmittel (16) und der Kolben (17) einen Höchstwert für den Luftstrom herstellen, der einem Nullwert für den Milchstrom entspricht.

## Revendications

1. Récipient à lait (3) configuré pour être relié au tube de distribution de vapeur et/ou d'eau (2) d'une machine à café (1), ledit récipient à lait (3) comprenant un corps collecteur (5) comportant une voie de raccordement (6) au dit tube de distribution de vapeur et/ou d'eau (2), une première ouverture (7) pour l'entrée du lait, reliée à un conduit (8) pour l'admission du lait présent dans ledit récipient (3), une seconde ouverture (10) pour l'entrée d'air reliée à la tuyauterie (13) pour l'admission de l'air, et une voie de raccordement (11) à une buse de distribution (12), un organe de commande manuelle (15) et un moyen de régulation (16) servant à réguler l'air d'admission et configuré pour provoquer une corrélation substantiellement inverse entre le flux d'air et le débit de lait aspiré dans ledit flux de vapeur et/ou d'eau en vertu d'une dépression le long dudit flux de vapeur et/ou d'air, ledit organe de commande (15) comportant au moins une première position (15a, 15b, 15c) pour commander la production de lait chaud et/ou de mousse de lait dans lequel ledit moyen de régulation (16) établit une valeur positive à la fois pour ledit flux d'air et ledit débit de lait aspiré dans ledit flux de vapeur et/ou d'eau, et dans lequel le moyen de régulation (16) comprend un piston (17) configuré pour réguler la section que ledit flux d'air emprunte à travers la tuyauterie (13) ; et **caractérisé en ce que** ledit organe de commande (15) comporte au moins une seconde position (15d) servant à commander l'exécution d'un cycle servant à nettoyer ledit corps collecteur (5) et/ou ladite buse (12) avec ledit flux de vapeur et/ou débit d'eau, dans lequel ledit moyen de régulation (16) et le piston (17) établissent une valeur maximum pour ledit flux d'air qui correspond à une valeur nulle pour ledit débit de lait.

2. Récipient à lait (3) selon la revendication précédente, **caractérisé en ce que** ledit piston (17) est solidaire dudit organe de commande manuelle (15) .

3. Récipient à lait (3) selon l'une quelconque des revendications précédentes, **caractérisé en ce qu'**il comprend des moyens autorisant l'exécution dudit cycle de lavage pouvant être activés par ledit organe de commande manuelle (15).

4. Récipient à lait (3) selon la revendication précédente, **caractérisé en ce que** lesdits moyens d'autorisation comprennent une came (33), solidaire dudit organe de commande manuelle (15), et un levier (34) pouvant être activé par ladite came (33) et comportant un élément (35) détectable par un capteur (36) lorsque ledit organe de commande (15) atteint ladite seconde position (15d) pour générer un signal d'autorisation de l'exécution dudit cycle de lavage.

5. Récipient à lait (3) selon la revendication précédente, **caractérisé en ce que** ledit élément détectable (35) comprend au moins un aimant permanent.

6. Récipient à lait (3) selon l'une quelconque des revendications précédentes, **caractérisé en ce que** ledit organe de commande (15) comprend un bouton rotatif (18).

7. Récipient à lait (3) l'une quelconque des revendications précédentes, **caractérisé en ce que** ledit corps collecteur (5), lesdits moyens de tuyauterie (13), ledit organe de commande (15), ledit moyen de régulation (16), ledit conduit d'admission (8) de lait et ladite buse de distribution (12) sont supportés par un couvercle amovible (19) dudit récipient (3).

8. Récipient à lait (3) selon la revendication 7, **caractérisé en ce que** ledit couvercle (19) comporte une structure démontable comprenant une première partie de recouvrement (19a) supportant ledit organe de commande (15) et une seconde partie de recouvrement (19b) supportant ledit corps collecteur (5) .

9. Récipient à lait (3) selon la revendication précédente, **caractérisé en ce qu'**il comporte des moyens de raccordement par encliquetage entre ladite première partie de recouvrement (19a) et ladite seconde partie de recouvrement (19b).

10. Récipient à lait (3) selon l'une quelconque des revendications précédentes, **caractérisé en ce que** ladite tuyauterie (13) comprend un corps de valve tubulaire (23) dans lequel est positionné ledit piston (17) et un tube flexible (22) comportant aux extrémités opposées un premier et un second connecteur (24, 25), ledit corps de valve (23) étant supporté par ladite première partie de recouvrement (19a), ledit tube flexible (22) comportant ledit premier connecteur (24) relié de façon amovible au dit corps de valve (23) et ledit second connecteur (25) relié de façon amovible à ladite ouverture (10) pour l'entrée de l'air.

11. Récipient à lait (3) selon la revendication précédente, **caractérisé en ce que** ledit corps de valve tubulaire (23) supporte en son sein de façon fixe un joint incliné (30) contre lequel ledit piston (17) se met en prise de façon amovible par insertion sous pression.

12. Récipient à lait (3) selon la revendication 10, **caractérisé en ce que** ledit corps de valve (23) se trouve dans une position décalée et à distance de ladite ouverture (10) d'entrée d'air.

13. Machine à café (1) **caractérisée en ce qu'**elle comprend un récipient à lait (3) selon l'une quelconque des revendications précédentes.

14. Procédé de nettoyage d'un récipient à lait (3) configuré pour être relié au tube de distribution de vapeur et/ou d'eau (2) d'une machine à café (1), ledit récipient (3) comprenant un corps collecteur (5) comportant une voie de raccordement (6) au dit tube de distribution de vapeur et/ou d'eau (2), une première ouverture (7) pour l'entrée du lait, reliée à un conduit (8) pour l'admission du lait présent dans ledit récipient (3), une seconde ouverture (10) pour l'entrée d'air reliée à la tuyauterie (13) pour l'admission de l'air, et une voie de raccordement (11) à une buse de distribution (12), un organe de commande manuelle (15) et un moyen de régulation (16) servant à réguler l'air d'admission et configuré pour provoquer une corrélation substantiellement inverse entre le flux d'air et le débit de lait aspiré dans ledit flux de vapeur et/ou d'eau en vertu d'une dépression le long dudit flux de vapeur et/ou d'air, ledit organe de commande (15) comportant au moins une première position pour commander la production de lait chaud et/ou de mousse de lait dans lequel/laquelle ledit moyen de régulation (16) établit une valeur positive à la fois pour ledit flux d'air et pour ledit débit de lait aspiré dans ledit flux de vapeur et/ou d'eau, et dans lequel le moyen de régulation (16) comprend un piston (17) configuré pour réguler la section que ledit flux d'air emprunte à travers la tuyauterie (13) ; et **caractérisé par** le nettoyage dudit corps collecteur et/ou de ladite buse avec ledit flux de vapeur et/ou débit d'eau en plaçant ledit organe de commande (15) dans une seconde position où ledit moyen de régulation (16) et ledit piston (17) établissent une valeur maximum dudit flux d'air qui correspond à une valeur nulle pour ledit débit de lait.
